# EUROPEAN PATENT SPECIFICATION

(11) **EP 1 518 924 B1**
(45) Date of publication and mention of the grant of the patent: **26.09.2007**
(21) Application number: 03736138.3
(22) Date of filing: 10.06.2003
(51) Int. Cl.: C12G 3/02, C12C 12/00, C12C 11/00, C12C 5/00, C12C 11/02

(54) **BEER-LIKE ALCOHOLIC BEVERAGE AND PROCESS FOR PRODUCING THE SAME**
BIERÄHNLICHES ALKOHOLISCHES GETRÄNK UND VERFAHREN ZUR HERSTELLUNG DAVON
BOISSON ALCOOLISEE DE TYPE BIERE ET PROCEDE DE PRODUCTION ASSOCIE

(30) Priority: 25.06.2002 JP 2002184760
(43) Date of publication of application: 30.03.2005
(60) Divisional application: 07113515.6
(73) Proprietor: Sapporo Breweries Limited, Tokyo 150-8522 (JP)
(72) Inventor: OONO, Masao, c/o Sapporo Breweries Ltd., Yaizu-shi, Shizuoka 425-0013 (JP)
(74) Representative: Billington, Lawrence Emlyn
(86) International application number: PCT/JP2003/007375
(87) International publication number: WO 2004/000990

(56) References cited:
- EP-A1- 1 063 285
- DE-A1- 10 062 705
- DE-A1- 19 813 749
- GB-A- 1 387 998
- JP-A- 10 191 954
- JP-A- 2001 103 954
- US-A- 3 798 331
- US-A- 4 636 389

## Description

The present invention relates to a method for producing a beer-taste alcoholic beverage having an effervescent property and a beer-taste alcoholic beverage produced by it, and more specifically, relates to a method for producing a beer-taste alcoholic beverage having an effervescent property with good head retention without using barley, wheat, or malt.

In the production of an alcoholic beverage from malt as a raw material, such as beer and Happoshu (sparkling malt liquor), malt made from barley and wheat is commonly used and, depending on conditions, after adding adjuncts for liquefaction and saccharification, solid-liquid separation utilizing malt peeling is performed in a wort filtration tank and hops are added into the obtained clear wort, which is boiled for a certain period of time. Subsequently, after solid-liquid separation is performed again; yeast for fermentation (primary fermentation) is added into the obtained clear wort, then the yeast is separated from the fermentation beer, and maturation (post-fermentation) is conducted so as to obtain a sparkling alcoholic beverage that contains carbon dioxide gas.

Currently, beer and sparkling malt liquor are present as alcoholic beverages using malt in Japan and beer is such that the usage of the malt is equal to or greater than 66.7 % by weight of all the raw materials except water according to the Liquor Tax Law. Also, the sparkling malt liquor belongs to a miscellaneous liquor employing malt as a part of raw materials and the usage of the malt as a raw material is classified into three kinds, i.e., less than 25 % by weight, equal to or greater than 25 % by weight and less than 50 % by weight, and equal to or greater than 50 % by weight and less than 66.7 % by weight, of all the raw materials except water.

By the way, malt is a raw material of both the aforementioned beer and sparkling malt liquor, in which the rates of use are different from each other, and those production processes start from a malting process of producing malt from barely, wheat, and so on, as described above and include a saccharification process of saccharifying raw materials containing adjuncts so as to obtain mash and a fermentation process for wort obtained by filtration of the mash, etc., wherein the selection of the raw materials for malting and the adjuncts and the good or bad quality of the malt obtained from the malting process directly influences the finished products. Also, process controls such as temperature control in the saccharification process after the malting greatly influence the taste and the head retention of an alcoholic beverage as the finished product.

Currently, although a beer-taste alcoholic beverage (an alcoholic beverage of which the taste is similar to that of beer) without brewing processes such as the malting process and the liquefaction and saccharification process, etc., that is, without the use of malt, has not been presented in Japan, a beer-taste alcoholic beverage without the use of malt is suggested in Japanese Laid-Open Patent Application No. 2001-37462, *"*A method for producing a beer-type beverage*"*. This production method is such that glucose syrup based on starch and a soluble proteinic material are prepared separately and the mixture of them is fermented together with hops or a hop extract and yeast, which is like a usual beer production method but in which the malting process is eliminated. However, with the production method proposed therein it is difficult to achieve the foam formation and head retention that are recognized as a feature of beer by consumers, practically, unless a proteinic material that contains high molecular weight protein positively influencing head retention originating from barley or wheat is used.

Additionally, a low-alcoholic beverage having excellent head retention in which malt fermentation liquid containing hops is used is disclosed in Japanese Laid-Open Patent Application No. 11-299473, "An alcoholic beverage containing carbon dioxide gas". However, the alcoholic beverage disclosed therein absolutely premises the use of malt. Brewing beer-like beverages wherein malt is at least partially replaced, is also disclosed in EP 1063 285 and US 4 636389.

Accordingly, the object of the present invention is to provide a beer-taste alcoholic beverage without using barley, wheat, or malt, and without requiring liquefaction or saccharification of a starch component of grains, etc., necessary for the conventional beer or sparkling malt liquor production, which also has taste and foam formation and/or head retention being in no way inferior to those of general beer, and a production method thereof.

The above object can be achieved by means of the following present invention, which is defined by the claims. According to an aspect of the present invention there is provided a method for producing a beer-taste alcoholic beverage having good appearance, taste and further head retention, for which pre-fermentation liquid is prepared from syrup containing a carbon source, a nitrogen source such as an amino acid-containing material, water, hops, coloring matter, a foam formation and/or head retention enhancing substance, and if necessary, flavouring. As similar to the usual beer production process, a beer-taste alcoholic beverage can be obtained by adding beer yeast to the pre-fermentation liquid made from the above-mentioned materials for fermentation.

According to the production method of the present invention, the pre-fermentation liquid is prepared without using grains such as malt, barley, and wheat, and thereby the production of an alcoholic beverage with taste and appearance similar to those of beer is enabled. Processes can be reduced compared to the conventional beer or sparkling malt liquor production processes and, accordingly, the production equipment can be small in size. Also, the production of homogeneous pre-fermentation liquid with constantly stable quality is enabled and a beer-taste alcoholic beverage with constant quality,can be obtained.

Since a foam formation and/or head retention enhancing substance and coloring matter are used in addition to hops in the alcoholic beverage produced by the production method of the present invention, the taste, the foam formation and/or the head retention as well as the appearance are in no way inferior to those of beer in spite of not using malt, barley, wheat, or the like, and an alcoholic beverage having well-bodied taste can be obtained. Then, furthermore, the addition of an appropriate flavor into the pre-fermentation liquid can provide variegated taste, so as to respond to the various needs of consumers of alcoholic beverages.

Embodiments of the present invention are explained below in order to explain the present invention in greater detail.

### [With respect to syrup]

First, syrup containing a carbon source as a raw material for the alcoholic beverage according to the present invention is explained.

The syrup used is preferably a sugar liquid produced by saccharifying a starch component of a starch component-containing raw material such as corn, potatoes, rice, or the like. The syrup is selected by considering the points mentioned below.

Among the components of the syrup, the composition being mainly polysaccharides more than tetraose that remain after the fermentation is very important for the body and the refreshing feeling of the finished product. Also, in a usual wort in the production of beer, etc., fermentable sugars consumed by beer yeast center on glucose, maltose, and maltotriose. For this reason, it is necessary to contain fermentable sugars at least in a proportion to the degree that the body feeling of beer is not lost in the least, in the solid component standard, and it is necessary to render it equal to or less than 95 % at most when the carbon source is obtained from a single kind of syrup.

Additionally, since it is known that glucose inhibits the fermentation, it is necessary to control the content of glucose to the degree that the fermentation is not inhibited, dependent on the strain of yeast. Furthermore, when food fibers, oligosaccharides, etc., are added separately for the purpose of providing the well-bodied taste of beer, the composition of the syrup is not particularly limited if it can be fermented.

Also, since corn, potatoes, or rice contains a certain content of an amino acid, when the syrup is produced from these raw materials, syrup that contains an amino acid is consciously prepared in the production processes and the utilization of it can serve to aid the enhancement of the fermentation property of the yeast in the fermentation process.

### [Nitrogen sources]

Next, a nitrogen source such as an amino acid-containing material being one of the raw materials used in the present invention is explained.

Herein, the nitrogen source used is not particularly limited if it is a nitrogen source being a nutrient source for yeast including inorganic salts such as amino acids including glutamic acid, ammonium phosphate, and ammonium sulfate or ones that can apply an enzyme to the nitrogen source (however, ones originating from barley, wheat, and malt are excluded).

Also, "an amino acid-containing material" may be such that after extracting starch components from corn, potatoes, rice, or the like, a portion of nitrogen-containing components is degraded to the level of amino acids through a further degradation process. The amino acids can be nutrient sources for yeast and are necessary for the fermentation of the yeast. In the case of the usual corn, potatoes, or rice, when the degradation to amino acids is conducted without using a special raw material, the amino acids necessary for the fermentation of the yeast-can be obtained.

It is preferable to provide amino acids of at least the content necessary for the fermentation of yeast to the pre-fermentation liquid for producing an alcoholic beverage, and specifically, the content of free amino acids in the pre-fermentation liquid is equal to or more than 10 mg/L. Also, inorganic salts such as ammonium phosphate, ammonium sulfate, etc., can be added as the nitrogen source according to need.

### [Hop]

Hops are very important for the taste and the froth of a beer-taste beverage (beer-tasting beverage). The hops are appropriately selected and used from usual powdery hops, a hop pellet, and a hop extract used for the production of beer, etc., dependent on the taste.

Furthermore, hop-modified products such as isomerized hop extracts, terahydro-iso-hop extracts, hexahydro-iso-hop extracts, etc. can be also employed. With respect to the usage of the hops or the hop-modified products, the range of 3 - 100 mg/L, preferably 5-30 mg/L, as a BU value being the index for the bitterness of beer is employed.

### [Coloring matters]

- Coloring matter provides an alcoholic beverage with visual beer feeling and is for providing refreshing feeling. As the coloring matter, natural colors such as caramel color, safflower color, gardenia color, kaoliang color, cochineal color, carrot color, paprika color, red cabbage color, grape color, purple corn color, elderberry color, beet color, monascus color, curcumin color, etc., and synthetic color such as food red No. 102, food red No. 104, orange No. 201, food yellow No. 5, yellow No. 201, etc., can be used. The coloring matter is mixed with the pre- or post-fermentation liquid, which is added in the amount of the degree of exhibiting beer-taste color or tint as well as the above-mentioned coloring matters.

### [Foam formation substance and Head retention enhancing substance]

As a foam formation and/or head retention enhancing substance, plant extraction saponin substances such as soy saponin, Yucca saponin, quillaja saponin, tea saponin, carrot saponin, ginseng saponin, etc.; proteinic substances such as albumen peptide, fetal bovine serum albumen, etc.; thickening agents such as xanthan gum, pullulan, guar gum, locust bean gum, carrageenan, pectin, acacia gum, tamarind seed polysaccharides, agars, tara gum, gellan gum, etc.; and alginic acid esters, etc., can be used singularly or plural of them may be used in combination.

Additionally, the hops, the foam formation substance, and the head retention enhancing substance are mutually influenced and the additional quantities of the foam formation substance and the head retention enhancing substance are such that head retention to the same degree as that of beer can be consequently realized by considering the quantity of the hops used.

### [Flavors]

Flavors are not particularly limited if the flavor can provide beer taste such as hop taste and malt taste. The flavor may be added according to need and with respect to the usage if it is used, the range of 1 - 5000 ppm, preferably 50 - 1000 ppm, is employed dependent on the strength of the flavor.

### [Food fibers]

Food fibers are not particularly limited if they contain a food fiber, although water-soluble food fibers are preferable. The food fibers may be added according to need and with respect to the usage if they are used, the range of 0.1 w/w% - 20 w/w%, preferably 1 w/w% - 7w/w%, is employed.

### [Herbs]

Herbs are not particularly limited if it can provide taste.

### [Production of an alcoholic beverage]

Hot water is added to the raw materials described above so as to provide a solution that contains a sugar component and an amino acid abundantly, and after such liquid is boiled once, cooling is applied to provide pre-fermentation liquid. Thus produced pre-fermentation liquid is fermented using yeast for fermentation such as beer yeast as performed in the usual beer production processes. Accordingly, a beer-taste alcoholic beverage can be obtained without using a starch material such as malt, barely, and wheat. Herein, a flavor may be added according to need at the post-fermantation. The produced beer-taste alcoholic beverage has taste similar to that of beer and an effervescent property due to the containment of carbon dioxide gas and is an alcoholic beverage excellent in foam formation and/or head retention.

A specific example implemented according to the production method of the present invention is described below.

This example was implemented on trial in brewing equipment with the scale of 400 L.

50 kg of syrup (water content of 75 %, commercially available as a product of DE50), 400 g of amino acid powder (amino acid content of 0.2 %, commercially available), 140 g of caramel, 400 g of hop pellets, and 70 ml of plant extraction quillaja saponin were added, 300 - 350 L of hot water was added to it, and then boiling was performed for 60 - 90 minutes.

Afterward, spent hops, etc., were removed by means of a sedimentation tank called a whirl pool and cooling was performed to 10 °C by a plate cooler so as to obtain pre-fermentation liquid.

Beer yeast was added into the pre-fermentation liquid and fermentation was conducted at 6 - 15 °C for 5 - 15 days. Afterward, the liquid storage was conducted at - 1 °C. The fermented liquid was filtered using kieselguhr so as to remove the yeast, so that liquor A similar to beer with approximately 5 % of alcohol was produced.

Liquor B was obtained by adding 100 ppm of beer taste having a feature of hops from flavors corporation T to the liquor A.

Furthemore, liquor C was obtained for comparison in which only plant extraction saponin was eliminated from the formulation for liquor A.

As the result of comparing the products A, B, and C with commercially available beer and sparking liquors and tasting by 10 panels, it was confirmed that each of the products is in no way inferior to the beer and has satisfactory taste.

Also, the froth properties of the products A, B, and C were examined. The froth property was evaluated by measuring head retention sigma vales (Σ). If the sigma value exhibits a high value, the head retention should be evaluated to be good.

Table 1 shows the investigated results of the head retention sigma values (Σ) in contrast to those of commercially available beer D and commercially available sparkling malt liquor E.

From the data shown in Table 1, it is confirmed that each of the products A and B obtained in this example has a froth property in no way inferior to the commercially available beer and sparkling malt liquor.

Further, the signa value of the liquor C containing no plant extraction saponin could not be measured and the foam formation end the head retention were clearly inferior in visual observation.

**(Table 1)**

| Froth properties | |
|---|---|
| Samples | Head retention Σ |
| Liquor A | 114 |
| Liquor B | 113 |
| Liquor C (comparison sample) | Incapable of measurement |
| Commercially available beer D | 114 |
| Commercially available sparking malt liquor E | 102 |

Although the preferable embodiments and the examples of the present invention are described above in detail, the present invention is not limited to such specific embodiments and various kinds of variations and modifications are allowed within the scope of the essence of the present invention as claimed in the claims.

As described above in detail, according to a method for producing an alcoholic beverage of the present invention, a beer-taste alcoholic beverage having taste and appearance similar to those of beer without using grains such as malt, barley, and wheat necessary for the production of beer, sparkling malt liquor, or the like and excellent in foam formation and/or head retention in spite of not using malt, barely, or wheat can be produced.

Also, the method for producing an alcoholic beverage according to the present invention does not include a liquefaction process or a saccharification process for starch, and the production can be performed by means of smaller equipment compared to production equipment for usual beer or sparkling malt liquor.

Additionally, since malt is not used in the production method of the present invention, the selection of malt raw materials and a malting process are not required so as to avoid the influence of the raw materials and the malting process on the product, so that a beer-taste alcoholic beverage with a constant quality can be commonly provided.

## Claims

1. A method for producing a beer-taste alcoholic beverage in which a sparkling alcoholic beverage is obtained by
producing a pre-fermentation liquid from a carbon source-containing syrup, a nitrogen source, hops, and water as raw materials and
fermenting the pre-fermentation liquid using yeast;
**characterised in that**:
the pre-fermentation liquid further comprises as raw materials coloring matter, and a foam formation and/or head retention substance selected from the group consisting of plant extraction saponin substances such as soy saponin, Yucca saponin, quillaja saponin, tea saponin, and ginseng saponin; thickening agents such as xanthan gum, pullulan, guar gum, locust bean gum, carrageenan, pectin, acacia gum, tamarind seed polysaccharides, agars, tara gum, and gellan gum; and alginic acid esters.

2. The method as claimed in claim 1, wherein a flavor is added to the pre-fermentation liquid or post-fermentation liquid.

3. The method as claimed in claim 1, wherein the nitrogen source is an amino acid-containing material.

4. The method as claimed in claim 1, wherein the syrup is obtained from the group consisting of corn, potatoes, and rice.

5. The method as claimed in claim 1, wherein the syrup contains a portion of the nitrogen source.

6. The method as claimed in claim 1, wherein the nitrogen source is obtained from a material selected from the group consisting of corn, potatoes, peas, soybeans, and rice.

7. The method as claimed in claim 3, wherein the amino acid-containing material has an amino acid composition sufficient to enable fermentation with beer yeast.

8. The method as claimed in claim 1, wherein the hops are selected from the group consisting of powdery hops, a hop pellet, a hop extract, and hop-modified products comprising isomerized hop extracts, hexahydro-iso-hop extracts, and terahydro-iso-hop extracts.

9. The method as claimed in claim 1, wherein the coloring matter is selected from the group consisting of natural colors such as caramel color, safflower color, gardenia color, kaoliang color, cochineal color, carrot color, paprika color, red cabbage color, grape color, purple corn color, elderberry color, beet color, monascus color, and curcumin color; and synthetic colors such as food red No. 102, food red No. 104, orange No. 201, food yellow No. 5, and yellow No. 201.

10. The method as claimed in claim 1, wherein the flavor is a flavor that provides beer-likeness.

11. The method as claimed in claim 1, wherein food fibers that provide functionality are used.

12. The method as claimed in claim 1, wherein a herb that provides a characteristic taste is used.

## Patentansprüche

1. Ein Verfahren zur Herstellung eines alkoholischen Getränks mit Biergeschmack, wobei ein sprudelndes alkoholisches Getränk erhalten wird durch
Herstellen einer Vor-Fermentierungsflüssigkeit aus einem Sirup, der eine Kohlenstoffquelle enthält, einer Stickstoffquelle, Hopfen und Wasser als Rohstoffe; und
Fermentieren der Vor-Fermentierungsflüssigkeit unter Verwendung von Hefe; **dadurch gekennzeichnet, dass**:
die Vor-Fermentierungsflüssigkeit ferner als Rohstoffe Farbstoffe und eine Schaumbildungs- und/oder eine Schaumkronenerhaltungssubstanz, ausgewählt aus der Gruppe, die aus Saponin-Substanzen aus Pflanzenextraktionen, wie zum Beispiel Sojasaponin, Yukkasaponin, Quillajasaponin, Teesaponin und Ginsengsaponin besteht; Verdickungsmittel, wie zum Beispiel Xanthangummi, Pullulan, Guargummi, Johannisbrotkernmehl, Carrageen, Pektin, Akaziengummi, Tamarindensamenpolysaccharide, Agars, Taragummi und Gellangummi und Alginsäureester umfasst.

2. Das Verfahren nach Anspruch 1, wobei der Vor-Fermentierungsflüssigkeit oder der Nach-Fermentierungsflüssigkeit ein Geschmacksstoff zugegeben wird.

3. Das Verfahren nach Anspruch 1, wobei die Stickstoffquelle ein Aminosäuren enthaltendes Material ist.

4. Das Verfahren nach Anspruch 1, wobei der Sirup aus der Gruppe, die aus Mais/Korn, Kartoffeln und Reis besteht, erhalten wird.

5. Das Verfahren nach Anspruch 1, wobei der Sirup einen Teil der Stickstoffquelle enthält.

6. Das Verfahren nach Anspruch 1, wobei die Stickstoffquelle aus einem Material, das ausgewählt wird aus Gruppe, die aus Mais/Korn, Kartoffeln, Erbsen, Sojabohnen und Reis besteht, erhalten wird.

7. Das Verfahren nach Anspruch 3, wobei das Aminosäuren enthaltende Material eine Aminosäurenzusammensetzung aufweist, die ausreicht, um eine Fermentierung mit Bierhefe zu ermöglichen.

8. Das Verfahren nach Anspruch 1, wobei der Hopfen aus der Gruppe ausgewählt wird, die aus pulverförmigem Hopfen, einem Hopfenpellet, einem Hopfenextrakt und Hopfen-modifizierten Produkten, die isomerisierte Hopfenextrakte, Hexahydro-Iso-Hopfenextrakte und Terahydro-Iso-Hopfenextrakte umfasst, besteht.

9. Das Verfahren nach Anspruch 1, wobei die Farbstoffe aus der Gruppe ausgewählt sind, die aus natürlichen Farben, wie zum Beispiel Karamellfarbe, Färberdistelfarbe, Gardenienfarbe, Kaoliangfarbe, Cochenillefarbe, Karottenfarbe, Paprikafarbe, Rotkohlfarbe, Traubenfarbe, Purpurmaisfarbe, Holunderbeerfarbe, Rübenfarbe, Monascusfarbe und Kurkuminfarbe; und synthetischen Farben, wie zum Beispiel Lebensmittelrot Nr. 102, Lebensmittelrot Nr. 104, Orange Nr. 201, Lebensmittelgelb Nr. 5, und Gelb Nr. 201 besteht.

10. Das Verfahren nach Anspruch 1, wobei der Geschmacksstoff ein Geschmacksstoff ist, der eine Bierähnlichkeit ergibt.

11. Das Verfahren nach Anspruch 1, wobei Lebensmittelfasern verwendet werden, die eine Funktionalität bereitstellen.

12. Das Verfahren nach Anspruch 1, wobei ein Kraut verwendet wird, das einen charakteristischen Geschmack ergibt.

## Revendications

1. Procédé de production d'une boisson alcoolisée au goût de bière dans lequel une boisson alcoolisée pétillante est obtenue en
produisant un liquide de préfermentation à partir d'un sirop contenant une source de carbone, une source d'azote, du houblon et de l'eau comme matières premières ; et
fermentant le liquide de préfermentation en utilisant de la levure ;
**caractérisé en ce que** :
le liquide de préfermentation comprend en outre comme matières premières, une matière colorante, et une substance de formation et/ou de tenue de mousse choisie dans le groupe constitué par les substances de saponine d'extraction de plantes telles que la saponine de soja, la saponine de yucca, la saponine de quillaja, la saponine de thé, et la saponine de ginseng ; des agents épaississants tels que la gomme de xanthane, le pullulane, la gomme de guar, la gomme de caroube, la carraghénine, la pectine, la gomme arabique, les poly(saccharides) de graines de tamarin, les agars-agars, la gomme de tara et la gomme de gellane ; et des esters d'acide alginique.

2. Procédé selon la revendication 1, dans lequel un arôme est ajouté au liquide de préfermentation ou au liquide de postfermentation.

3. Procédé selon la revendication 1, dans lequel la source d'azote est une matière contenant des acides aminés.

4. Procédé selon la revendication 1, dans lequel le sirop est obtenu à partir du groupe consistant en le maïs, les pommes de terre et le riz.

5. Procédé selon la revendication 1, dans lequel le sirop contient une portion de la source d'azote.

6. Procédé selon la revendication 1, dans lequel la source d'azote est obtenue à partir d'une matière choisie dans le groupe consistant en le maïs, les pommes de terre, les pois, les sojas et le riz.

7. Procédé selon la revendication 3, dans lequel la matière contenant des acides aminés a une composition en acides aminés suffisante pour permettre une fermentation avec de la levure de bière.

8. Procédé selon la revendication 1, dans lequel les houblons sont choisis dans le groupe consistant en les houblons en poudre, un pellet de houblon, un extrait de houblon, des produits modifiés par houblon comprenant les extraits de houblon isomérisés, des extraits d'hexahydro-iso-houblon et des extraits de tétrahydro-iso-houblon.

9. Procédé selon la revendication 1, dans lequel la matière colorante est choisie dans le groupe consistant en les couleurs naturelles telles que la couleur caramel, la couleur de carthame, la couleur gardénia, la couleur kaoliang, la couleur cochenille, la couleur carotte, la couleur paprika, la couleur chou rouge, la couleur raisin, la couleur maïs violet, la couleur baie de sureau, la couleur betterave, la couleur monascine et la couleur curcumin ; et des couleurs synthétiques telles que le rouge alimentaire n° 102, le rouge alimentaire n° 104, l'orange n° 201, le jaune alimentaire n° 5 et le jaune n° 201.

10. Procédé selon la revendication 1, dans lequel l'arôme est un arôme qui lui fait ressembler à de la bière.

11. Procédé selon la revendication 1, dans lequel des fibres alimentaires qui confèrent une fonctionnalité sont utilisées.

12. Procédé selon la revendication 1, dans lequel une herbe qui confère un goût caractéristique est utilisée.
